(19) Europäisches Patentamt
European Patent Office
Office européen des brevets

(11) **EP 4 525 253 A1**

(12) **EUROPEAN PATENT APPLICATION**

(43) Date of publication:
**19.03.2025 Bulletin 2025/12**

(21) Application number: **23196945.2**

(22) Date of filing: **12.09.2023**

(51) International Patent Classification (IPC):
**H02J 3/48** (2006.01)   **H02J 3/24** (2006.01)

(52) Cooperative Patent Classification (CPC):
**H02J 3/48; H02J 3/241;** H02J 3/381; H02J 2300/28

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Siemens Gamesa Renewable Energy
A/S**
**7330 Brande (DK)**

(72) Inventors:
• **Brogan, Paul Brian**
  **Killearn, Glasgow, G63 9LG (GB)**
• **Elliott, Douglas**
  **Glasgow G73 2PY (GB)**
• **Knueppel, Thyge**
  **3500 Værløse (DK)**

(74) Representative: **SGRE-Association**
**Siemens Energy Global GmbH & Co. KG**
**SE I IM P Intellectual Property**
**Siemenspromenade 9**
**91058 Erlangen (DE)**

(54) **CONTROL SYSTEM PROVIDING DROOP CONTROL AND WIND TURBINE**

(57)    A control system for reducing a power imbalance in a power grid (200) is provided. The control system (10) is configured to control the operation of a power converter (150), the power converter (150) being configured to convert electrical power of a power source (110) and to provide the converted electrical power to the power grid (200). The control system (10) comprises a droop control, wherein the droop control comprises a first droop control circuit (20) configured to adjust the output power of the power converter (150) in dependence on a first frequency deviation ($\Delta f$, $\Delta f1$) between a frequency reference ($f_{Ref}$) and a first monitored frequency ($f_M$, $f_{M1}$) and a second droop control circuit (40) configured to adjust the output power of the power converter (150) in dependence on a second frequency deviation ($\Delta f$, $\Delta f2$) between the frequency reference ($f_{Ref}$) and the first monitored frequency ($f_M$, $f_{M1}$) or a second monitored frequency ($f_{M2}$). The first droop control circuit (20) operates at a first operation speed higher than an operation speed of the second droop control circuit (40).

FIG 3

EP 4 525 253 A1

# EP 4 525 253 A1

**Description**

FIELD OF THE INVENTION

The present invention relates to a control system for reducing a power imbalance in power grid, wherein the control system comprises a droop control. It further relates to a wind turbine comprising such control system, to a method of controlling a power converter, and to a respective computer program.

In an electrical power grid, to keep the frequency of the electrical power constant, the electrical power drawn by loads from the power grid should be in balance with the electrical power provided into the power grid by power sources, such as power plants. Several conditions exist in which such balance may become disturbed. For example, an additional load may draw power from the grid, or a load or a power source may be disconnected from the grid. In particular in island networks in which a predetermined limited number of power sources feed power into the grid, and in electrical islands that may for example result from disconnecting a part of a power grid from a main grid (e.g. due to a fault or the like), such changes in the electrical power drawn from the grid or provided into the grid may result and relatively large changes of grid frequency. An increasing frequency indicates a power surplus, whereas a declining frequency indicates a power deficit in the respective power grid. The speed or rate by which the frequency changes (the so-called rate of change of frequency, RoCoF) is related to the size of the power imbalance $\Delta P$ relative to the inertia of the system:

$$df/dt = \Delta P * f_0 / (2 * H * S_{Base}) = RoCoF$$

wherein $f_0$ is the nominal grid frequency, H the inertial constant of the system and S the base load at disconnection.

When one or more wind turbines (WT) are operating in and supporting an electrical island, the wind turbine or wind farm must automatically change its power output to support the load balance. A solution to the problem of providing a respective power balance by a wind farm is provided in the document WO 2019/166290 A1, wherein the power provided by the individual wind turbines of the wind farm is allowed to vary and will be different (unless there is wind for full power production), wherein the distributed nature of wind turbines within the wind farm is considered. In particular, not all wind turbines must contribute equally to the load balance as long as the sum of the power output of the wind turbines balances the load on the electrical island.

In the prior art solutions, load changes on an electrical island are however still a challenge. In particular, the reaction to a large sudden power imbalance, such as the disconnection of a large load or of a generator (which may for example be tripped due to a fault) still generates challenges. This in in particular the case for situations in which wind turbines or other converter-based power sources feed electrical power into the power grid. As a result, the imbalance in the power grid may cause the electrical frequency to deviate significantly from the desired value, such as from a desired 50 Hz or 60 Hz grid frequency, which may result in the triggering of protection mechanisms.

SUMMARY

Accordingly, there is a need to mitigate at least some of the drawbacks outlined above and to provide an improved way of balancing the electrical power in a power grid.

This need is met by the features of the independent claims. The dependent claims describe embodiments and/or examples of the invention.

According to an aspect, a control system for reducing a power imbalance in a power grid is provided. The control system is configured to control the operation of a power converter, wherein the power converter is configured to convert electrical power of a power source and to provide the converted electrical power to the power grid. The control system comprises a droop control. The droop control comprises a first droop control circuit configured to adjust the output power of the power converter in dependence of a first frequency deviation between a frequency reference (e.g., a nominal grid frequency) and a first monitored frequency. The first monitored frequency is indicative of a frequency of electrical power provided by the power converter and/or a frequency of the power grid. The droop control further comprises a second droop control circuit configured to adjust the output power of the power converter in dependence on a second frequency deviation between the frequency reference and the first monitored frequency or a second monitored frequency, wherein the second monitored frequency is indicative of a frequency of electrical power provided by the power converter and/or a frequency of the power grid. The first droop control circuit operates at a first operation speed and the second droop control circuit operates at a second operation speed. The first operation speed is higher than the second operation speed.

By using the droop control to control the output power of the power converter, a change in a load balance on the power grid that may be sensed by the frequency deviation may be compensated fast and efficiently. In particular, by providing two droop control circuits that operate at different operation speeds, and in particular the faster first droop control circuit, a quick reaction to fast load changes on the power grid may be achieved. A fast compensation upon occurrence of large frequency changes on the power grid may thus be performed by the first droop control circuit. Also, by such first and second droop control circuits, it may be possible to quickly react in a situation in which a part of a power grid becomes disconnected, such as during a HVDC (high-voltage DC) blocking event. By being able to quickly provide power balancing in the power grid, it may further be prevented that the power source and possibly other power sources may need to be disconnected from the power grid; they may thus be enabled to ride through such event or another type of failure event. Accordingly, de-energizing of the respective power systems and a time-consuming re-energization of the respective equipment, such as a wind turbine, may be avoided.

For example, if the power imbalance is large (e.g., more than 10%) the response time of conventional systems that provide power-balancing may be too slow and may cause the frequency of the power grid to significantly under-/over-shoot. The disconnection (tripping) of protection relays is often triggered by under-/over-frequency, so that such frequency changes may result in the tripping of further generators and/or loads. In conventional systems, the power imbalance in the power grid may thus further increase. By providing such two droop control circuits, one operating at a faster operation speed, the fast reaction may counteract the power imbalance quickly and may accordingly limit the frequency over-/under-shoot to values that no longer cause such tripping. The stability of the power grid may thereby be improved significantly.

The second droop control circuit may for example be configured to provide the droop control during steady state operation, e.g. during operation where load changes on the power grid occur relatively slowly. The second droop control circuit may allow an overall control of the power source and may thereby ensure that the power limitations of the electrical power made available by the power source are considered or met. A safe and secure steady state operation of the power source and power converter may thereby be achieved.

The frequency reference may for example be a reference for a grid frequency of the power grid, such as the nominal grid frequency of 50 Hz or 60 Hz. The first and/or second droop control circuit may be implemented at least partially digitally. The elements of the first and/or second droop control circuits may for example be implemented as digital circuit blocks or as software within one or more processing units.

The first droop control circuit and/or the second droop control circuit may be a droop control loop. In particular, as the frequency deviation of the grid frequency depends on the power balance in the power grid and thus provides feedback on the power balance, the first and/or second droop control circuits may effectively implement respective first and second feedback loops. Adjusting the power output of the power converter changes the power balance in the power grid and may accordingly change the frequency deviation.

Reducing the power imbalance in the power grid may imply that the output power of the power converter is adjusted so as to reduce or minimize the frequency deviation.

The first monitored frequency and the second monitored frequency may be (substantially) the same. They may however be obtained differently. For example, they may be measured at different positions on the converter, on the coupling to the power grid or on the power grid, or may be obtained in form of a set-point for a frequency of electrical power given out by the power converter. Such frequency set-point may generally correspond to the frequency at the output of the power converter, which may in turn correspond to a frequency of electrical power on the power grid.

The operation speed of the respective first or second droop control circuit may correspond to a speed, frequency, or rate at which a reference for an output power of the power converter is adjusted or updated by the respective circuit.

For example, the first droop control circuit may be configured to adjust such output power referenced faster than the second droop control circuit.

In an example, the first droop control circuit is configured to receive an adjusted power reference for an output power of the power converter from the second droop control circuit and to apply thereto a first power offset using droop control based on the first frequency deviation. The second droop control circuit may be configured to generate the adjusted power reference by receiving a power reference for an output power of the power converter (e.g., from an external source or from an operator) and to apply thereto a second power offset using droop control based on the second frequency deviation. Accordingly, as the first circuit acts faster than the second circuit, the first circuit may quickly counteract respective power imbalances by applying the first power offset to the reference, whereas on longer timescales, e.g. steady state operation, the second circuit may apply a respective power offset to the power reference. A power offset may for example be determined from the respective frequency deviation using a droop function. Respective methods are known in the art and will not be explained in greater detail here.

In an example, the first droop control circuit and the second droop control circuit may employ separate droop functions to generate a respective first power offset and a second power offset from the first frequency deviation and the second frequency deviation, respectively. This may allow the first circuit and the second circuit to have a different reaction to frequency deviations on the power grid. It is noted that separate droop functions does not exclude that the two distinct droop functions have the same droop characteristic; however, they may have a different droop characteristic. In another example, the first frequency deviation is identical to the second frequency deviation and the first droop control circuit and the second droop control circuit use the same droop function to generate a power offset from the frequency deviation. The power offset may be employed by both the first droop control circuit and the second droop control circuit to provide the droop control. The power offset may be an offset for the power reference for the output power of the power converter. By such configuration, the determination of the frequency deviation and the droop function may only need to be provided once, as they may be employed by both circuits, thereby reducing the number of components of both circuits and providing a more efficient control system. The droop function may in particular be provided within the first droop control circuit, so that the power offset is determined with the required operating speed; both the first and the second droop control circuit may thus always have available an up-to-date power offset determined by the droop function.

A droop function may provide a linear or non-linear relationship between a frequency deviation and a power offset, i.e. it may for a received frequency deviation give out a predetermined power offset. The droop function may in particular determine a droop gain. In a simple case, a droop function may be a linear function that associate the frequency deviation with the power offset and that may have a slope that determines the droop gain. In a more complex case, the droop function may have different sections of different slope, may be a nonlinear function, or may be composed of linear and/or nonlinear functions.

In a further example, the control system may be configured to limit the adjustment of the output power of the power converter by the first droop control circuit at an amplitude of the first frequency deviation or at a rate of change or frequency of change of the first frequency deviation at which the second droop control circuit is operable to adjust the output power of the power converter. Limiting may include reducing or suppressing the response of the first droop control circuit at the respective quantity, e.g. in a respective frequency range or rate range or amplitude range within which the second droop control circuit operates. Thereby, interference of the control between the first and second droop control circuits may be reduced or prevented. In view of the lower operation speed of the second circuit, the second circuit does generally not operate at frequencies or rates of change at which the first circuit operates. For example, the first circuit may be operable in a first range of rate of change of frequency of the monitored frequency and the second circuit may be operable in a second range of rate of change of frequency of the monitored frequency, the second range being lower than the first range. The first droop control circuit may thus only react to faster changes of the monitored frequency, and the second droop control circuit may only react to slower changes of the monitored frequency.

The first droop control circuit may for example comprise one or more respective circuit elements configured to provide the limiting. For example, the first droop control circuit may comprise a filter, such as a high-pass filter, and/or a limiter, such as a rate limiter, to provide the limiting of the adjustment of the output power by the first circuit. The interaction between the first and second circuits may thus be reduced in an efficient manner.

The first droop control circuit may for example comprise a high-pass filter to filter the first frequency deviation or a power offset generated from the first frequency deviation, or may comprise a low-pass filter to filter the first frequency deviation or a power offset generated from the first frequency deviation and a summation note to subtract the respective filtered quantity from the first frequency deviation or from the generated power offset, respectively. Additionally or alternatively, the first control circuit may comprise a filter configured to pass the first frequency deviation only if its amplitude exceeds a predetermined threshold. The frequency deviation may have an amplitude in positive or negative direction and a respective threshold may be provided for each direction (or the absolute value may be used). By acting on such large frequency deviation, fast changes to the load balance on the grid may be compensated, since such large frequency changes are generally associated with a sudden change in load (if the load changes slowly, the compensation systems including the second control circuit may ensure that no such large frequency deviations occur).

The second droop control circuit may comprise a low-pass filter to limit high-frequency components on which the first control circuit may act. Such low-pass filter may be provided to filter the respective second frequency deviation and/or to filter a power offset generated therefrom.

The first droop control circuit may be configured to generate an adjusted power reference for an output power of the power converter. The first droop control circuit may comprise a limiter configured to limit the adjusted power reference to a maximum output power that the power converter can provide based on an electrical power made available by the power source. Thereby, it may be ensured that the adjusted power reference can be met by the power output of the power converter. For example, the power source, such as a power generation system of the wind turbine, may only be able to deliver a certain amount of power, and the first droop control circuit may adjust the power reference so as to lie above this certain amount of power. The limiter may avoid that the power converter is operated with such excessive power reference.

In an example, the control system comprises a converter controller configured to control a modulation of power electronic switches of the power converter, wherein the first droop control circuit is implemented in the converter controller. The converter controller may for example operate the power electronic switches using pulse width modulation (PWM). Such converter controller generally operates with a relatively high control execution speed and may thus provide a high operation speed for the first droop control circuit.

The first monitored frequency may for example be a frequency set-point of the power converter or a frequency of the converted electrical power, which may for example be determined by such converter controller.

The control system may comprise a power generation system controller, and the power generation system controller may be configured to control the operation of the power source. At least part of the second droop control circuit may be implemented in the power generation system controller. Such a power generation system controller may thereby provide a reduction of power imbalances on the power grid during steady state operation. Such power generation system controller may have a system view and may thus ensure that the power system stays within operation limits even when supporting the power balance in the power grid. For example, at least the part of the second circuit that adjusts the reference for the output power of the power converter (that, e.g., may apply a power offset to a power reference for the output power of the power converter), may be provided in the power generation system controller.

The power generation system controller may be configured to control a speed and/or output power of the power source. The power generation system controller may comprise a power reference controller configured to adjust or limit an adjusted power reference generated by the second droop control circuit in dependence on a operation parameter of the power source, e.g. a operation setpoint, a power available from the power source, or the like. For example, such power reference controller may comprise a power reference generator that generates a (WTC) power reference for the output power of the power converter based on the operation parameter of the power source and a minimum function block that passes on the smaller of the adjusted power reference and the (WTC) power reference towards the first droop control circuit. The second droop control circuit may thus provide droop control within the operating limits of the power source, e.g. of a wind turbine.

The power generation system controller may comprise one or more filters and/or limiters to further process the adjusted power reference, e.g. to adjust signal dynamics or the like.

The power source may for example be a power generation system of a wind turbine, a solar power source, such as photovoltaic panels, a battery, a flywheel, a fuel cell, a HVDC source, a battery, and/or other conceivable sources of electrical power. In a particular example, the power generation system controller may at least be configured to control a speed of a prime mover of the power source, in particular the rotational speed of a generator of the power source.

The power source may for example be a power generation system of a wind turbine. The power generation system controller may be a wind turbine controller, or the power generation system controller may be a wind farm controller configured to supply a power reference to the wind turbine. The second droop control circuit may thus at least partly be implemented in a controller at the wind turbine level that may remain in charge of a steady state operating point of the wind turbine and that may avoid that the second droop control circuit causes the power converter to operate the wind turbine in an operating point that cannot be supported by available wind resources. The droop control may thus implement a fast control loop in the inner converter control and a slower control loop in the outer wind turbine or wind farm control.

The second droop control circuit may receive a power reference for an output power of the wind turbine for example from a wind farm controller, an operator, or the like, and may add a power offset determined by the second droop control circuit to provide the adjusted power reference that is provided to the first droop control circuit.

The wind turbine controller may be configured to determine a power reference for the power output of the wind turbine and/or a torque reference for a generator of the wind turbine. The wind turbine controller may in particular be configured to control a rotor speed of a wind turbine rotor of the wind turbine. It may further be configured to control a pitch angle of blades of such a wind turbine rotor and/or a yaw angle of the wind turbine.

A wind farm controller may be a controller that distributes set-points for output power to wind turbines of the wind farm. It may provide an overall control of the wind farm. It may obtain grid parameters, e.g. measure grid frequency at a point of common coupling (PCC), in a collector grid and/or in the power grid.

The power converter may comprise or may be a grid side converter (GSC) of a back-to-back converter of a wind turbine, and the first and second droop control circuits may adjust an output power reference for such grid side converter.

The first operation speed may be at least 5, 10, 50 or even 100 times higher than the second operation speed. For example, the operation speed of a converter controller, e.g. a control execution speed thereof, may be more than 100 times higher than the operation speed of the wind turbine controller. A significant advantage can thus be achieved by the first droop control circuit, as it may react significantly faster to power imbalances in the power grid. The operation speed may for example be determined by a processing rate or processing frequency, such as a clock rate or the like, of the respective circuit.

The first droop control circuit may for example operate at a first processing rate and the second droop control circuit may operate at a second processing rate, the first processing rate being higher than the second processing rate. The respective processing rate may determine the rate at which parameters are acquired and an adjusted power reference for the power converter is generated by the respective droop control circuit.

In an example, the control system is configured to operate at least in a grid-supporting mode and/or in a grid-forming mode to support the power grid. The control system may be configured to provide the droop control at least during the grid-supporting mode and/or during the grid-forming mode, respectively. In particular, the above-mentioned converter controller may operate in a respective mode. By such grid-forming mode, the power converter may be operated as a voltage source converter and may in particular determine a voltage and frequency of electrical power on the power grid. The converter controller may accordingly operate with a respective voltage set-point and frequency set-point. Such operation may allow a stable voltage and/or frequency in the power grid when other power sources capable of providing grid-forming have been disconnected from the power grid. It should be clear that multiple power sources, such as multiple wind turbines, may operate in a grid-forming mode and may together provide a stable voltage and frequency on the power grid.

The control system may in particular be configured to operate the power converter as a virtual synchronous generator when operating the power converter in the grid-supporting mode and/or the grid-forming mode. In such operation, the power converter may simulate the operation of a synchronous generator, with the respective inertia that causes the synchronous generator to slow down slowly as the load in the power grid increases, resulting in a respective change in the frequency set-point for the power converter. This may allow protective functions of connected loads and generators to operate as if connected to a conventional power grid that receives power from synchronous generators. Operation of a power converter as a virtual synchronous generator is known in the art, so that no further details are given here.

The power grid may be an electrical island supplied by the power source or by a power plant comprising the power source, such as a wind power plant or solar power plant. The power grid may in particular be an island grid or a section of a power grid that has become disconnected from a remaining larger section of the power grid. In such electrical island, relatively large changes of frequency may result from changes to the power drawn from or supplied into the electrical island, which may be compensated efficiently by the control system described herein. When a load is suddenly disconnected from the power grid, the first droop control circuit may quickly reduce the power reference for the output power of the power converter by applying droop control, or when a load is connected to the power grid or a power source is disconnected from the power grid, resulting in a frequency drop, the first droop control circuit may quickly react to increase the power reference for the power converter. Accordingly, the frequency is stabilized and the power imbalance on the power grid is reduced, which may allow power sources and in particular one or more wind turbines to ride through a respective event without becoming disconnected from the power grid.

According to a further aspect of the invention, a wind turbine is provided that comprises a power source in form of a power generation system and that further comprises a power converter configured to convert electrical power provided by the power source and to provide the converted electrical power to a power grid. The wind turbine comprises a control system having any of the configurations described herein, the control system controlling the power converter.

According to a further aspect of the invention, a method of controlling the operation of a power converter to reduce a power imbalance in a power grid is provided. The power converter is configured to convert electrical power of a power source and to provide the converted electrical power to the power grid. The method comprises adjusting, by a first droop control circuit, the output power of the power converter in dependence on a first frequency deviation between a frequency reference and a first monitored frequency, wherein the first monitored frequency is indicative of a frequency of electrical power provided by the power converter and/or a frequency of the power grid; and adjusting, by a second droop control circuit, the output power of the power converter in dependence on a second frequency deviation between the frequency reference and the first monitored frequency or a second monitored frequency, wherein the second monitored frequency is indicative of a frequency of electrical power provided by the power converter and/or a frequency of the power grid, wherein the first droop control circuit operates at a first operation speed and the second droop control circuit operates at a second operation speed, the first operation speed being higher than the second operation speed. By such method, advantages similar to the ones outlined further above may be achieved.

The method may comprise any of the steps described herein with respect to the control system and/or to the wind turbine or wind farm, and the method may be performed by a control system having any of the configurations described herein. The control system or the wind turbine may be configured to carry out any of the method steps described herein.

According to a further aspect of the invention, a computer program for operating a control system configured to control the operation of a power converter is provided, the power converter being configured to convert electrical power of a power source and to provide the converted electrical power to the power grid. The computer program comprises control instructions which, when executed by a processing unit of the control system, cause the processing unit to perform any of the methods described herein. The computer program may be provided on a volatile or non-volatile data carrier or storage medium.

It is to be understood that the features mentioned above and those yet to be explained below can be used not only in the respective combinations indicated, but also in other combinations or in isolation, without leaving the scope of the present invention. In particular, the features of the different aspects, examples, and embodiments of the invention can be combined with each other unless noted to the contrary.

BRIEF DESCRIPTION OF THE DRAWINGS

The foregoing and other features and advantages of the invention will become further apparent from the following detailed description read in conjunction with the accompanying drawings. In the drawings, like reference numerals refer to like elements.

Fig. 1 is a schematic drawing illustrating a wind turbine comprising a control system according to an example of the invention.

Fig. 2 is a schematic drawing showing a control system according to an example of the invention.

Fig. 3 is a schematic drawing showing an exemplary implementation of the control system of Fig. 2 according to an example of the invention.

Fig. 4 is a schematic drawing showing an exemplary implementation of the control system of Fig. 2 according to an example of the invention.

Fig. 5 shows a schematic diagram illustrating a droop control response of the first and second droop control circuits of the control system of Fig 4.

Fig. 6 is a flow diagram illustrating a method of controlling the operation of a power converter according to an example of the invention.

DETAILED DESCRIPTION

In the following, embodiments and/or examples of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as open-ended terms (i.e., meaning "including, but not limited to,") unless otherwise noted. Unless otherwise noted, the term power may herein refer to active electrical power.

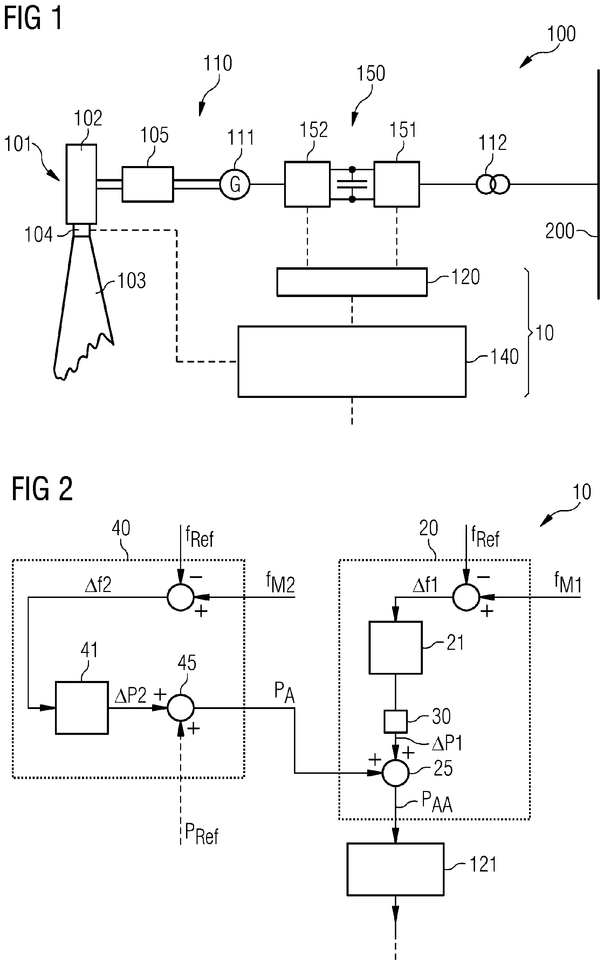

Fig. 1 illustrates a power converter 150 which may be controlled by a control system 10 according to an example of the invention. In the present non-limiting example, the power converter 150 forms part of a wind turbine 100 that comprises a power source 110 in form of a power generation system that comprises generator 111. Wind turbine 100 may comprise a wind turbine rotor 101 having a hub 102 with rotor blades 103, which may be pivotable by means of a pitch drive 104. Hub 102 may be coupled to generator 101 via gearbox 105, or may be directly coupled to generator 101 in a direct drive configuration. Power converter 150 comprises a grid side converter 151 coupled to the power grid 200, optionally via a wind turbine transformer 112 and/or further transformers. A generator side converter 152 of converter 150 is coupled to generator 111. Power converter 150 is controlled by the converter controller 120, which may for example provide control signals, such as PWM control signals, to semiconductor switches of the power converter 150. Wind turbine 100 is further controlled by the wind turbine controller (WTC) 140, which has the overall control over the wind turbine and which may for example control the pitch drive 104, provide references, such as active power, reactive power, torque, and the like to the converter controller 120, may receive references from an external controller, such as a wind farm controller, and may further receive sensor data from various wind turbine sensors, such as rotational speed, wind speed, and the like.

Control system 10 comprises the converter controller (CC) 120 and the WTC 140. WTC 140 may for example control the power generation system and the power converter 150 of wind turbine 100 in such way that the wind turbine rotor 101 is rotating at a predetermined tip speed ratio to provide maximum extraction of power from the wind. It may for example employ a maximum power point tracking method. It may control the electromagnetic torque acting on generator 101 (e.g. by controlling power converter 150) and may further control the pitch angle of blades 103, thereby controlling the rotational speed of rotor 101. The WTC 140 thus has available information on the power that can be provided by power generation system 110 and is further capable of controlling the electrical power that is being generated. WTC 140 may thus generate a power reference in accordance with which the CC 120 operates.

Power grid 200 may be an island grid or may be an electrical island that has become isolated from a larger electrical grid, e.g. a utility grid, for example by grid faults and the opening of grid circuit breakers. In such grid, to provide a stable voltage and frequency, the CC 120 may be operated in a grid-forming mode or at least a grid-supporting mode. In the grid-forming mode, the power converter 150 may not follow the grid voltage and grid frequency, but may be operated with set-points for voltage and frequency as a voltage source converter and may thus essentially set voltage and frequency on the grid 200. Operation in grid-forming mode is known in the art and will not be described in greater detail here.

Control system 10 implements droop control in order to reduce power imbalances on power grid 200, wherein the control system 10 adjusts the output power of power converter 150 so as to counteract respective power imbalances. Power imbalances may occur if loads are connected or disconnected from power grid 200, and/or other power sources are connected or disconnected from power grid 200. Whereas in conventional power grids using large synchronous generators, the generator mass and in particular its inertia opposes frequency changes on the power grid that are due to power imbalances, in particular by a respective acceleration or deceleration of the generator, such inertia is not present in the power system of the wind turbine 100, where power is fed to the grid by power converter 150. The CC 120 may be operated as a virtual synchronous generator, wherein when more power is drawn than available, the converter control simulates the respective slowing down of the generator and resulting frequency change. Accordingly, the converter controller 120 may operate with a frequency set-point that changes as the power imbalance on power grid 200 increases or decreases.

Converter controller 120 generally has a fast control execution speed, as it needs to control the semiconductor switches of power converter 150. On the other hand, the WTC 140 generally has a significantly lower control execution speed. The operation speed of the CC 120 may for example be more than 10, 50, or even 100 times faster than the operation speed of WTC 140. A difference of more than a factor of 100 is common. The reaction times of the CC 120, e.g. two changes on the power grid, can thus be significantly faster than the reaction times of WTC 140. On the other hand, the CC 120 has not sufficient information available on the overall operation of the wind turbine, such as on the power generation system, to determine itself the power that the converter 150 can provide to power grid 200.

For providing an efficient droop control in such setting, the exemplary solution illustrated in Fig. 2 may be employed. Control system 10 of Fig. 2 comprises a first droop control circuit 20 and a second droop control circuit 40. The operation speed of droop control circuit 20 is faster, e.g. by one of the aforementioned factors, than the operation speed of the second circuit 40. First droop control circuit 20 may be implemented partly or fully in the converter controller 120, whereas second control circuit 40 may be implemented partly or fully in the wind turbine controller 140. Second droop control circuit 40 receives a frequency reference $f_{Ref}$, which may be a nominal grid frequency at which power grid 200 is to be operated. It further receives a monitored frequency $f_{M2}$, which may be a frequency measured at output of power converter 150, at the connection towards power grid 200, on power grid 200 or the like. $f_{M2}$ may alternatively be a set-point in accordance with which the power converter 150 is operated (and which may thus essentially correspond to the frequency at the output of power converter 150). A frequency deviation $\Delta f2$ is generated by subtracting the monitored frequency from the frequency reference, and is provided to a droop function 41. Droop function 41 generates a power offset $\Delta P2$, which is the adjustment in the output power of the power converter in order to counteract the power imbalance, which causes the frequency deviation $\Delta f2$. At summation node 45, a power reference Pref is received (for example from a wind farm controller) and the power offset $\Delta P2$ is added to the power reference. An adjusted power reference $P_A$ is then provided to the first droop control circuit 20. As an example, such adjusted power reference $P_A$ may be provided from the WTC 140 to the CC 120.

Similarly, the second circuit 20 receives a monitored frequency $f_{M1}$, which may again be measured at any of the above indicated locations or be a set-point, e.g. from the CC 120. The monitored frequency is subtracted from the reference frequency $f_{Ref}$ to determine the frequency deviation $\Delta f1$. The frequency deviation is again provided to a droop function 21, which generates a power offset $\Delta P1$. At summation node 25, the power offset $\Delta P1$ may be added to the received adjusted power reference $P_A$ to generate the further adjusted power reference $P_{AA}$. The core control 121 of the converter controller 120 may then be provided with this adjusted power reference $P_{AA}$ and may operate the power converter 150 in accordance therewith, in particular by providing respective control signals to the semiconductor switches to cause the power converter 150 to give out an output power towards the grid that corresponds to the adjusted power reference $P_{AA}$.

If a load is suddenly shed from power grid 200, a fast and large change of grid frequency may result, to which the WTC 140 and thus the second circuit 40 may not be able to react. Due to the increased operation speed of the first circuit 20, the first circuit 20 may react to such frequency change and may adjust the output power of power converter 150 accordingly to counteract the power imbalance. The power source 110 and the power converter 150 may be capable of delivering the respective power for a short period of time. However, to ensure a stable steady state operation, the first droop control circuit 20 may only respond to such relatively fast or large changes of the grid frequency. For this purpose, a limiting element 30 may be provided that limits the response of the first circuit 20 in a region in which the second droop control circuit 40 operates, e.g. by reducing or suppressing the response of the first circuit 20 in this region. The response of the fast droop control circuit 20, which operates rather autonomously, is thus temporary and the droop control is gradually handed over to the slower second droop control circuit 40 which supports steady state operation. By such combination of a fast and a slow droop control circuit, an improved speed of response may be achieved by employing the control in CC 120, while at the same time, an overall power balance and stable wind turbine operation may be maintained by the WTC 140 implementing at least part of the second droop control circuit 40.

As both circuits use corresponding functions and elements, these may be provided only once and may be used by both circuits. For example, the droop functions 21, 41 may have the same or a similar response, yet they may also be different. As shown below, they may be implemented as a single droop function. Similarly, the monitored frequencies $f_{M1}$ and $f_{M2}$ may be different but may also be the same. In the latter case, the same frequency deviation $\Delta f$ may be used by both circuits and may be determined only once. Further, it should be clear that Fig. 2 only gives a schematic overview of the droop control implemented by circuits 20, 40 and that the circuits may comprise further elements, in particular to interact with the WTC and CC controllers 140, 120, some of which are explained further below.

Power converter 150 may in other implementations be a converter of a solar power source, a flywheel, a battery, a fuel cell, a hydro facility, a HVDC source and the like. The first and second control circuits may be implemented (partly or fully) in the respective converter controller and overall controller of the power source, so that the teachings described herein above and further below are likewise applicable to such other implementations.

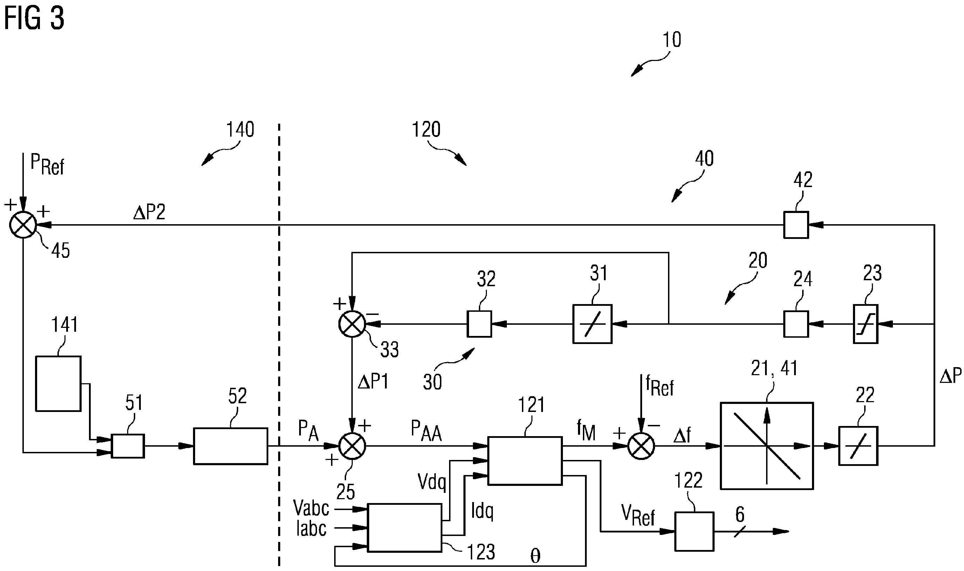

Fig. 3 shows a particular implementation of the control system 10 of Fig. 2, so that the above explanations are equally applicable. The core control 121 of the converter controller 120 operates with a frequency set-point, e.g. from a virtual synchronous generator control scheme, that is used as the monitored frequency $f_M$. As explained above, the frequency reference $f_{Ref}$ is subtracted to generate the frequency deviation $\Delta f$, which is used by both circuits in the example of Fig. 3. The droop functions 21, 41 are implemented as a single droop function that generates the power offset $\Delta P$ from the frequency deviation $\Delta f$. A slew rate limiter 22 is further optionally provided to limit the changes in power to a range in which the control can act. The power offset $\Delta P$ is then used by the first droop control circuit 20 (or first inner loop), as well as by the second droop control circuit 40 (or second outer loop). To adjust the dynamics, an optional low-pass filter 24 may be employed.

The limiting element 30 is in the example if Fig. 3 implemented by the slew rate limiter 31, the low-pass filter 32, and the summation node 33, which are constantly bleeding out the output of the fast first droop circuit. The resulting filter signal essentially comprises the steady state components of the frequency offset, which are subtracted at summation node 33. The properties of the limiting element 30 may be adjusted so as to match the response of the second droop control circuit 40. The resulting signal $\Delta P1$ thus only contains power adjustments due to fast changes in frequency, but it does not comprise the steady state, i.e. the slower, changes on which circuit 40 acts. As described above, $\Delta P1$ is added to the adjusted power reference $P_A$ received from the second circuit at summation node 25 and is then provided as further adjusted power reference $P_{AA}$ to the core control 121. Using the received power reference, the core control 121 generates the respective control signals for the PWM (pulse width modulation) modulator 122, for example by providing a respective PWM voltage reference Vref. A feedback measurement unit 123 may further obtain feedback measurements, e.g. three-phase voltage and three-phase current, at the output of power converter 150, and may perform respective transformations using the phase angle θ to provide feedback quantities $V_{dq}$ and $I_{dq}$ to the core control 121. Elements 121, 122 and 123 may form part of the converter controller 120.

In the outer control loop, i.e. the second droop control circuit 40, a low-pass filter 42 may be provided that removes the high-frequency components on which the first droop control circuit 20 acts. Low-pass filter 42 may thus have a transfer function that is the same or similar to the one of the low-pass filter 32. Alternatively, instead of elements 31, 32, 33, the limiting element 30 may comprise a high-pass filter. The response of low-pass filter 42 may then be complementary to the response of such high-pass filter. Other implementations are of course conceivable, such as a use of other filters, rate limiters, or the like. It may thus be ensured that the first droop control circuit responds only to the high-frequency behavior during the transient phase of an unbalance event, whereas the second droop control circuit responds to slower steady state changes. The filter constants or transfer functions (or respective ramp rate limits) may be selected so as to match the bleed-out that is provided by limiting element 30 to the operation speed of the second droop control circuit 40. Thereby, a smooth handover between the two droop control circuits may be ensured.

The resultant second power offset $\Delta P2$ is then added to the power reference $P_{Ref}$ at the summation node 45 of the second droop control circuit 40, which may be implemented in the WTC 140.

In the WTC controller 140, a power source control unit 141 may control the wind turbine speed, power output, and other control parameters. It may correspond to the core control of the WTC 140. In particular, depending on the operating characteristic of the wind turbine and the environmental parameters, control unit 141 may generate a WTC power reference for the output power of the power converter 150 based on the power that the wind turbine is currently capable of producing. The power source control unit 141 may thus implement a power reference generator.

At the minimum function block 51, the minimum of the WTC power reference and of the power reference received from the summation node 45 (the adjusted power reference formed by adding $\Delta P2$ to $P_{Ref}$) is taken. The power reference generator of power source control unit 141 and the limiting block 51 are an exemplary implementation of the power reference controller mentioned above.

The minimum may then be provided to a filtering and/or limiting block 52, where further dynamic adjustments may be made, such as with regard to the allowable frequency or rate of change of the power reference. The resulting adjusted power reference $P_A$ is then provided to the converter controller 120 and its first droop control circuit 20, in particular to the summation node 25.

The overall control of the output power of power converter 150 thus remains with the wind turbine controller 140, in particular its power source control unit 141 under consideration of the received power reference $P_{Ref}$. Without power imbalance in power grid 200, power offsets $\Delta P1$ and $\Delta P2$ are substantially zero, so that the power converter is operated in steady state operation with the respective power reference. Upon occurrence of a sudden power imbalance, the first circuit 20 will first react and adjust the power reference by $\Delta P1$ to counteract the imbalance. Droop control will then be handed over to the second droop control circuit 40, in dependence on the responses of the limiting element 30 and the filter 42. A fast, efficient, and secure stabilization of the power grid may thus be achieved.

In order to avoid that the power offset $\Delta P1$ applied by the first circuit 20 exceeds operating limits, a limiter 23 may be employed. Limiter 23 may for example limit the maximum power increase and/or maximum power reduction that can be applied by first circuit 20. The respective limit(s) may be determined dynamically. For example, the increase in power output may be limited to an estimate of the power available from the power source 110. The WTC 140 may for example estimate the available power and may provide a respective information to CC 120 to set a respective limit in the limiter 23. Limiter 23 may then limit the maximum value of ΔP to the respective limits. Other implementations of a respective limiter are certainly conceivable.

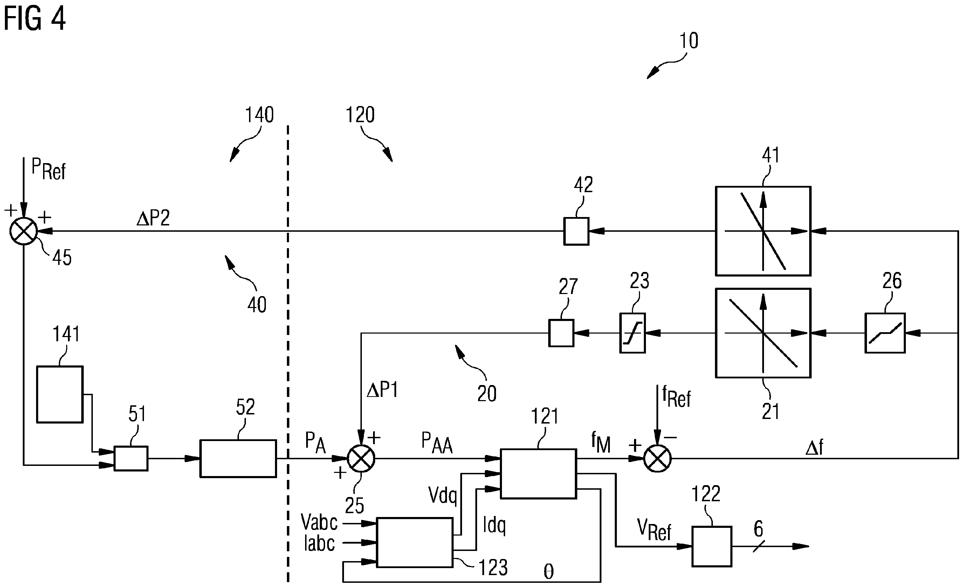

Fig. 4 illustrates a further implementation of the control system 10 of Fig. 2, which is a modification of the control system 10 of Fig. 3. Accordingly, the above explanations are equally applicable and only differences will be explained.

The example of Fig. 4 again employs a common frequency deviation Δf determined in the CC 120 for both the first and second circuits 20, 40. However, the coordination between the first and second circuits 20, 40 is achieved in the example of Fig. 4 by only operating the first droop control circuit 20 when the frequency deviation (e.g., its absolute amplitude) exceeds a predefined threshold. A dead band is thus used in which the first circuit does not react to frequency changes. The first circuit 20 thus comprises the dead band limiter 26 that only passes the frequency deviation Δf if it is above or below respective upper and lower thresholds. If the frequency deviation is small, the power imbalance is sufficiently slow or small so that the slower second loop 40 can react. If the frequency deviation is high, it indicates a fast large power imbalance on which the first fast circuit 20 is to react.

A corresponding dead band limiter may be provided in the outer second droop control circuit 40, for example to avoid frequent reactions to only small frequency changes.

Both the first and second circuits 20, 40 employ separate droop functions 21, 41 in the example of Fig. 4. Low-pass filters 27, 42 may be used to adjust the dynamics in the respective droop control circuits. Limiting element 23 for limiting the maximum change to the available power is again provided.

The droop gains of droop functions 21, 41 and the dead band(s) on the first and optionally the second droop control circuit may be selected so as to allow the outer second droop control circuit 40 to provide the primary droop control that acts most of the time on frequency changes. If an event occurs that causes a significant power imbalance, the inner, first droop control circuit 20 will engage if the frequency deviation exceeds the dead band limits of the dead band limiter 26. In such situation, the inner first circuit 20 will provide a faster response, which restores the power balance quicker (thus reducing the frequency deviation) which would not be possible to achieve by the outer second circuit 40 on its own. Otherwise, circuit 20 will let the outer second circuit 40 handle the event.

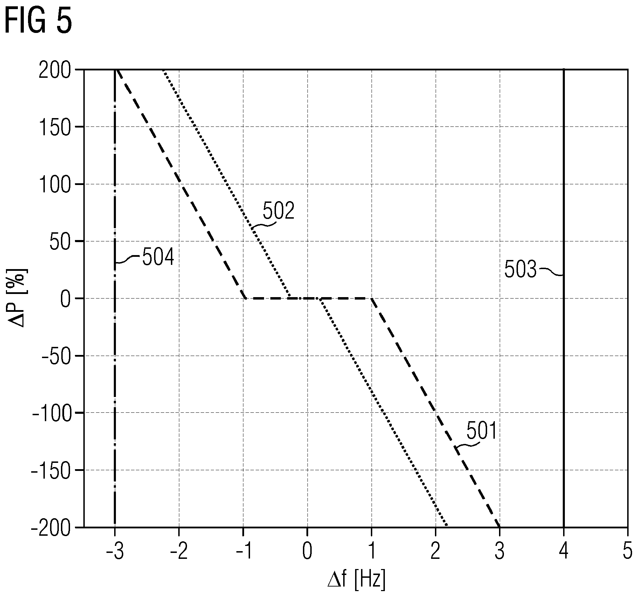

Fig. 5 illustrates an exemplary over-frequency response for the control system 10 of Fig. 4, wherein both the inner first circuit 20 and the outer second circuit 40 comprise dead band limiters. Curve 501 illustrates the response of the first circuit 20, which has a relatively large dead band, so that the first circuit 20 reacts to large frequency deviations that exceed the limits of the dead band limiter 26. Lines 503 and 504 illustrates limits that may for example be imposed by the limiter 23 on the maximum allowable frequency deviation to limit the maximum allowable rate of change. Curve 502 illustrates the response of the outer second droop control circuit 40 which has a smaller dead band and which reacts on a smaller frequency deviation on which the first circuit would not react. In general, it should be clear that in cases of a large frequency deviation, due to the fast reaction of the first circuit 20, the power imbalance is already being counteracted before the second slow circuit becomes active in view of its low operation speed.

Fig. 2 illustrates a wind turbine with a full converter solution. It should be clear that the teachings provided herein are equally applicable to wind turbines having different converter solutions and different topologies, such as a DFIG topology or the like, and to other power sources.

The droop control circuits of figures 2, 3 and 4 may at least partly or may fully be implemented in software running on the respective controller, e.g. the CC 120 and the WTC 140. The controller(s) may comprise a processing unit, such as a microprocessor, digital signal processor, application specific integrated circuit, or the like and a memory storing control instructions. By executing the control instructions by means of the processing unit, the controller may be caused to perform any of the methods described herein. The memory may comprise a RAM, ROM, flash memory, hard disc drive, or the like.

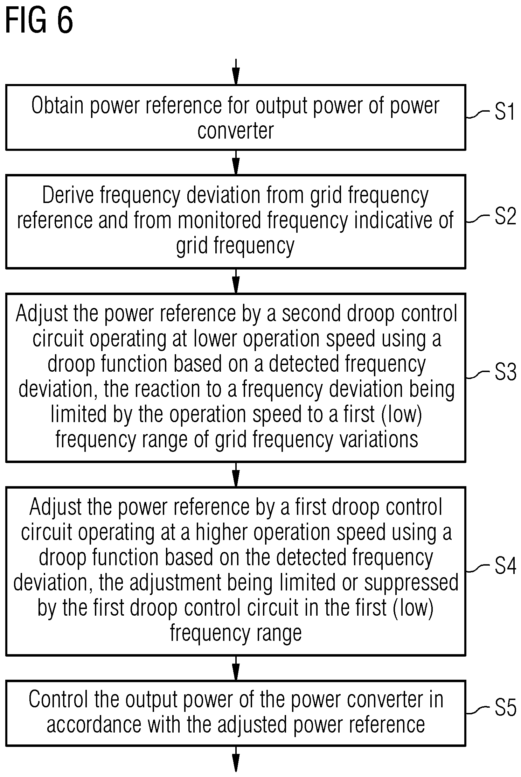

Fig. 6 is a flow-diagram illustrating a method according to an example. In step S1, a power reference $P_{Ref}$ for the output power of the power converter is obtained. In step S2, the frequency deviation Δf is derived from the grid frequency reference $f_{Ref}$ and from the monitored frequency $f_M$, which is generally indicative of the grid frequency. In step S3, the power reference $P_{Ref}$ is adjusted by a second droop control circuit 40 operating at a lower operation speed using a droop control function based on the detected frequency deviation. The operation speed of the second circuit may limit the reaction to a frequency deviation to a first (low) frequency range of grid frequency variations. The second circuit 40 may thus have an inherent low-pass characteristic.

In step S4, the power reference, which may in particular be the adjusted power reference received from the second circuit 40, may be adjusted by the first droop control circuit 20 that operates at a higher operation speed using a droop function based on the detected frequency deviation. The adjustment may be limited (e.g. suppressed) by the first droop control circuit in the first frequency range, i.e. in the frequency range in which the second slower circuit 40 operates. Several means of how such limitation or suppression may be achieved are explained above.

The output power of the power converter is then controlled in step S5 in accordance with the adjusted power reference as provided by the first droop control circuit 20. Accordingly, droop control with a reliable steady state operation and a fast reaction speed to load imbalances may be achieved.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

**Claims**

1. A control system for reducing a power imbalance in a power grid (200), wherein the control system (10) is configured to control the operation of a power converter (150), the power converter (150) being configured to convert electrical power of a power source (110) and to provide the converted electrical power to the power grid (200), wherein the control system (10) comprises a droop control, wherein the droop control comprises:

   - a first droop control circuit (20) configured to adjust the output power of the power converter (150) in dependence on a first frequency deviation ($\Delta f$, $\Delta f1$) between a frequency reference ($f_{Ref}$) and a first monitored frequency ($f_M$, $f_{M1}$), wherein the first monitored frequency is indicative of a frequency of electrical power provided by the power converter (150) and/or a frequency of the power grid (200); and
   - a second droop control circuit (40) configured to adjust the output power of the power converter (150) in dependence on a second frequency deviation ($\Delta f$, $\Delta f2$) between the frequency reference ($f_{Ref}$) and the first monitored frequency ($f_M$, $f_{M1}$) or a second monitored frequency ($f_{M2}$), wherein the second monitored frequency ($f_{M2}$) is indicative of a frequency of electrical power provided by the power converter (150) and/or a frequency of the power grid (200),

   wherein the first droop control circuit (20) operates at a first operation speed and wherein the second droop control circuit (40) operates at a second operation speed, the first operation speed being higher than the second operation speed.

2. The control system according to claim 1, wherein the first droop control circuit (20) is configured to receive an adjusted power reference ($P_A$) for an output power of the power converter (150) from the second droop control circuit (40) and to apply thereto a first power offset ($\Delta P1$) using droop control based on the first frequency deviation ($\Delta f$, $\Delta f1$), and wherein the second droop control circuit (40) is configured to generate the adjusted power reference ($P_A$) by receiving a power reference ($P_{ref}$) for an output power of the power converter (150) and applying thereto a second power offset ($\Delta P2$) using droop control based on the second frequency deviation ($\Delta f$, $\Delta f2$).

3. The control system according to claim 1 or 2, wherein the first droop control circuit (20) and the second droop control circuit (40) employ separate droop functions (21, 41) to generate a respective first power offset and a second power offset from the first frequency deviation ($\Delta f1$) and the second frequency deviation ($\Delta f2$), respectively, or wherein the first frequency deviation ($\Delta f$) is identical to the second frequency deviation ($\Delta f$) and the first droop control circuit (20) and the second droop control circuit (40) use the same droop function (21, 41) to generate a power offset ($\Delta P$) from the frequency deviation ($\Delta f$), the power offset being employed by both the first droop control circuit (20) and the second droop control circuit (40) to provide said droop control.

4. The control system according to any of the preceding claims, wherein the control system (10) is configured to limit the adjustment of the output power of the power converter (150) by the first droop control circuit (20) at an amplitude of the first frequency deviation or at a rate of change or frequency of change of the first frequency deviation at which the second droop control circuit (40) is operable to adjust the output power of the power converter (150).

5. The control system according to claim 4, wherein the first control circuit (20) comprises a high pass filter to filter the first frequency deviation or a power offset generated from the first frequency deviation, or comprises a low pass filter (32) to filter the first frequency deviation or a power offset ($\Delta P$) generated from the first frequency deviation and a summation node (33) to subtract the filtered quantity from the first frequency deviation or from the generated power offset, respectively, and/or wherein the first control circuit (20) comprises a filter (26) configured to pass the first frequency deviation only if its amplitude exceeds a predetermined threshold.

6. The control system according to any of the preceding claims, wherein the first droop control circuit (20) is configured to apply a power offset ($\Delta P1$) to generate an adjusted power reference ($P_{AA}$) for an output power of the power converter (150), wherein the first droop control circuit (20) comprises a limiter (23) configured to limit positive and/or negative changes to the adjusted power reference by the power offset ($\Delta P1$) to a respective maximum value, wherein preferably, the limiter (23) is configured to limit the adjusted power reference to a maximum output power that the power converter (150) can provide based on an electrical power made available by the power source (110) and/or to limit a power reduction of the adjusted power reference to a maximum value.

7. The control system according to any of the preceding claims, wherein the control system (10) comprises a converter controller (120) configured to control a modulation of power electronic switches of the power converter (150), wherein the first droop control circuit (10) is implemented in the converter controller (120).

8. The control system according to any of the preceding claims, wherein the control system (10) comprises a power generation system controller (140), wherein the power generation system controller (140) is configured to control the operation of the power source (110), and wherein at least part of the second droop control circuit (40) is implemented in the power generation system controller (140).

9. The control system according to claim 8, wherein the power generation system controller (140) is configured to control a speed and/or an output power of the power source (110),
wherein the power generation system controller (140) comprises a power reference controller (141, 51) configured to adjust or limit an adjusted power reference generated by the second droop control circuit (40) in dependence on an operation parameter of the power source (110).

10. The control system according to claim 8 or 9, wherein the power source (110) is a power generation system of a wind turbine (100), and
wherein the power generation system controller (140) is a wind turbine controller or wherein the power generation system controller (140) is a wind farm controller configured to supply a power reference to the wind turbine (100).

11. The control system according to any of the preceding claims, wherein the control system (10) is configured to operate at least in a grid supporting mode and/or in a grid forming mode to support the power grid (200), wherein the control system (10) is configured to provide said droop control at least during the grid supporting mode and/or during the grid forming mode, respectively.

12. The control system according to claim 11, wherein the control system is configured to operate the power converter (150) as a virtual synchronous generator when operating the power converter (150) in the grid supporting mode and/or in the grid forming mode.

13. A wind turbine comprising a power source (110) in form of a power generation system and comprising a power converter (150) configured to convert electrical power provided by the power source (110) and to provide the converted electrical power to a power grid (200), wherein the wind turbine (100) comprises a control system (10) according to any of the preceding claims, the control system (10) controlling the power converter (150).

14. A method of controlling the operation of a power converter (150) to reduce a power imbalance in a power grid (200), the power converter (150) being configured to convert electrical power of a power source (110) and to provide the converted electrical power to the power grid (200), wherein the method comprises:

- adjusting, by a first droop control circuit (20), the output power of the power converter (150) in dependence on a first frequency deviation ($\Delta f$, $\Delta f1$) between a frequency reference and a first monitored frequency ($f_M$, $f_{M1}$), wherein the first monitored frequency ($f_M$, $f_{M1}$) is indicative of a frequency of electrical power provided by the power converter (150) and/or a frequency of the power grid (200); and
- adjusting, by a second droop control circuit (40), the output power of the power converter (150) in dependence on a second frequency deviation ($\Delta f$, $\Delta f2$) between the frequency reference and the first monitored frequency ($f_M$, $f_{M1}$) or a second monitored frequency ($f_{M2}$), wherein the second monitored frequency ($f_{M2}$) is indicative of a frequency of electrical power provided by the power converter (150) and/or a frequency of the power grid (200),

wherein the first droop control circuit (20) operates at a first operation speed and wherein the second droop control circuit (40) operates at a second operation speed, the first operation speed being higher than the second operation speed.

15. A computer program for operating a control system configured to control the operation of a power converter (150), the power converter (150) being configured to convert electrical power of a power source (110) and to provide the converted electrical power to the power grid (200), wherein the computer program comprises control instructions which, when executed by a processing unit of the control system (10), causes the processing unit to perform the method of claim 14.

FIG 1

FIG 2

FIG 3

EP 4 525 253 A1

FIG 4

FIG 5

# FIG 6

Obtain power reference for output power of power converter — S1

Derive frequency deviation from grid frequency reference and from monitored frequency indicative of grid frequency — S2

Adjust the power reference by a second droop control circuit operating at lower operation speed using a droop function based on a detected frequency deviation, the reaction to a frequency deviation being limited by the operation speed to a first (low) frequency range of grid frequency variations — S3

Adjust the power reference by a first droop control circuit operating at a higher operation speed using a droop function based on the detected frequency deviation, the adjustment being limited or suppressed by the first droop control circuit in the first (low) frequency range — S4

Control the output power of the power converter in accordance with the adjusted power reference — S5

**EP 4 525 253 A1**

Europäisches
Patentamt

European
Patent Office

Office européen
des brevets

# EUROPEAN SEARCH REPORT

Application Number

EP 23 19 6945

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2020/176993 A1 (BROMBACH JOHANNES [DE] ET AL) 4 June 2020 (2020-06-04) * abstract * * figure 6 * * paragraphs [0007], [0041], [0044] * | 1,3,11, 13-15 | INV. H02J3/48 H02J3/24 |
| Y | US 2022/140602 A1 (BROMBACH JOHANNES [DE] ET AL) 5 May 2022 (2022-05-05) * abstract * * figure 4 * * paragraphs [0032], [0039], [0040], [0049] * | 1,3,11, 13-15 | |
| A | KR 2014 0048395 A (UNIV KOREA RES & BUS FOUND [KR]) 24 April 2014 (2014-04-24) * the whole document * | 1-15 | |
| A | EP 3 565 081 A1 (KAWASAKI HEAVY IND LTD [JP]) 6 November 2019 (2019-11-06) * the whole document * | 1-15 | |
| A | US 2019/341781 A1 (MARCHEGIANI GABRIELE [IT] ET AL) 7 November 2019 (2019-11-07) * the whole document * | 1-15 | TECHNICAL FIELDS SEARCHED (IPC) H02J |

The present search report has been drawn up for all claims

| Place of search | Date of completion of the search | Examiner |
|---|---|---|
| Munich | 8 March 2024 | Hurtado-Albir, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 6945

This annex lists the patent family members relating to the patent documents cited in the above-mentioned European search report.
The members are as contained in the European Patent Office EDP file on
The European Patent Office is in no way liable for these particulars which are merely given for the purpose of information.

08-03-2024

| Patent document cited in search report | | Publication date | Patent family member(s) | | Publication date |
|---|---|---|---|---|---|
| US 2020176993 | A1 | 04-06-2020 | BR | 112019024675 A2 | 16-06-2020 |
| | | | CA | 3062472 A1 | 05-11-2019 |
| | | | CN | 110720165 A | 21-01-2020 |
| | | | DE | 102017112491 A1 | 13-12-2018 |
| | | | EP | 3635837 A1 | 15-04-2020 |
| | | | JP | 2020522977 A | 30-07-2020 |
| | | | KR | 20200014901 A | 11-02-2020 |
| | | | RU | 2727939 C1 | 27-07-2020 |
| | | | US | 2020176993 A1 | 04-06-2020 |
| | | | WO | 2018224596 A1 | 13-12-2018 |
| US 2022140602 | A1 | 05-05-2022 | CA | 3133933 A1 | 29-04-2022 |
| | | | CN | 114430179 A | 03-05-2022 |
| | | | EP | 3993215 A1 | 04-05-2022 |
| | | | US | 2022140602 A1 | 05-05-2022 |
| KR 20140048395 | A | 24-04-2014 | NONE | | |
| EP 3565081 | A1 | 06-11-2019 | BR | 112019011400 A2 | 15-10-2019 |
| | | | CA | 3042496 A1 | 05-07-2018 |
| | | | CN | 110114951 A | 09-08-2019 |
| | | | EP | 3565081 A1 | 06-11-2019 |
| | | | JP | 6764338 B2 | 30-09-2020 |
| | | | JP | 2018107959 A | 05-07-2018 |
| | | | US | 2020083709 A1 | 12-03-2020 |
| | | | WO | 2018124123 A1 | 05-07-2018 |
| US 2019341781 | A1 | 07-11-2019 | CN | 110313111 A | 08-10-2019 |
| | | | EP | 3563464 A1 | 06-11-2019 |
| | | | JP | 7060192 B2 | 26-04-2022 |
| | | | JP | 2020503831 A | 30-01-2020 |
| | | | KR | 20190098250 A | 21-08-2019 |
| | | | US | 2019341781 A1 | 07-11-2019 |
| | | | WO | 2018122726 A1 | 05-07-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019166290 A1